# EUROPÄISCHE PATENTSCHRIFT

(11) **EP 3 770 513 B1**
(45) Veröffentlichungstag und Bekanntmachung des Hinweises auf die Patenterteilung: **08.10.2025**
(21) Anmeldenummer: 20169864.4
(22) Anmeldetag: 16.04.2020
(51) Int. Cl.: F24D 3/16, F24F 13/24, F24F 5/00

(54) **STRAHLFLÄCHENAUFBAU MIT ABSORPTIONSKÖRPER**
RADIATING SURFACE STRUCTURE WITH ABSORPTION ELEMENT
STRUCTURE DE SURFACE RAYONNANTE POURVUE DE CORPS D'ABSORPTION

(30) Priorität: 23.07.2019 DE 202019104064 U
(43) Veröffentlichungstag der Anmeldung: 27.01.2021
(73) Patentinhaber: Frenger Systemen BV Heiz- und Kühltechnik GmbH, 64823 Gross-Umstadt (DE)
(72) Erfinder: MENGE, Klaus, 64823 Gross-Umstadt (DE); MENGE, Stefan, 64823 Gross-Umstadt (DE)
(74) Vertreter: Keil & Schaafhausen Patentanwälte PartGmbB

(56) Entgegenhaltungen:
- DE-A1- 102011 121 164
- DE-A1- 102014 220 071
- DE-A1- 2 630 056
- DE-A1- 3 202 078
- DE-B- 1 108 398
- DE-U1- 202016 107 007

## Beschreibung

Die Erfindung betrifft einen Strahlflächenaufbau zum Temperieren eines Raumes mit einer Deckenstrahlplatte, die dem zu temperierenden Raum zugewandt ist und mit einem von einem Wärmeübertragungsmedium durchströmten Rohrregister verbunden ist, wobei auf der dem zu temperierenden Raum abgewandten Seite eine Absorptionsschicht vorgesehen ist.

Es ist aus der DE 10 2011 121 164 B4 bekannt, bei einem Strahlflächenaufbau der oben genannten Art auf der dem zu temperierenden Raum abgewandten Seite eine Absorptionsschicht sowie zusätzlich eine mit einem schallabsorbierenden Material gefüllte Absorptionsbox zur Schallabsorption vorzusehen. Dabei weist die Absorptionsbox zwei Längsseitenwände auf, die wenigstens bereichsweise mit Durchgangsöffnungen mit einem Durchmesser von 5 mm bis 20 mm versehen sind, die in einem Raster mit einem Abstand von 10 mm bis 50 mm angeordnet sind. Die quaderförmige Absorptionsbox hat hierbei geschlossene, ungelochte Stirnwände sowie eine geschlossene, ungelochte Oberseite. Die DE 10 2011 121 164 B4 offenbart damit einen Strahlflächenaufbau mit den Merkmalen des Oberbegriffs von Anspruch 1.

Aus DE 32 02 078 A1 ist es zudem bekannt, einen Absorptionskern, aufweisend eine Kernschicht und eine Deckschicht, mit einer Schutzfolie abzudecken.

Des Weiteren ist es aus DE 20 2016 107 007 U1 bekannt, ein Schallabsorptionsmodul in Form eines faserhaltigen Materials für ein Kühl- und/oder Heizmodul in eine Folie zu hüllen.

Es ist daher Aufgabe der vorliegenden Erfindung, einen Strahlflächenaufbau der eingangs genannten Art bereitzustellen, der eine weiter verbesserte Schallabsorption innerhalb eines Raumes, bei im Wesentlichen gleichbleibenden Temperierungseigenschaften des Strahlflächenaufbaus, ermöglicht.

Diese Aufgabe wird im Wesentlichen durch einen Strahlflächenaufbau mit den Merkmalen des Anspruchs 1 gelöst.

Dazu ist vorgesehen, dass auf einer dem zu temperierenden Raum abgewandten Seite des Strahlflächenaufbaus zusätzlich ein Körper aus einem schallabsorbierenden Material zur Schallabsorption angeordnet ist. Ferner weist der Körper aus dem schallabsorbierenden Material auf wenigstens einer Seite eine Wand auf, wobei der Körper und die Wand gemeinsam von einer Folie umschlossen sind, wobei die Wand aus einem gegenüber der Folie steiferen Material besteht und die Folie eine zumindest teilweise unebene und/oder nicht regelmäßige Oberfläche aufweist.

Es hat sich als besonders vorteilhaft erwiesen, wenn die Folie aus einem Kunststoff besteht, insbesondere aus Polyethylen geringer Dichte (LDPE). Überraschend wurde festgestellt, dass eine Folie, die im Gegensatz zu glatten Wänden einer aus dem Stand der Technik bekannten Box keine ebene, regelmäßige Fläche aufweist, einen nochmals verbesserten Schallabsorptionsgrad (αₛ) in dem zu temperierenden Raum erreicht. Dabei ist die Herstellung des Strahlflächenaufbaus einfacher und kann flexibler an die Einbausituation sowie die Größe des Strahlflächenaufbaus angepasst werden, als dies bei den bekannten Boxen mit feststehenden Maßen möglich ist.

Der in die Folie eingepackte Körper kann eine annähernd quaderförmige Gestalt haben. Schallwellen, die aus dem Raum auf den Strahlflächenaufbau treffen, können entweder durch optional in der Deckenstrahlplatte vorgesehene Öffnungen oder insbesondere seitlich durch die Folie hindurch zu dem Körper gelangen, in welchem sie durch das schallabsorbierende Material weiter abgeschwächt werden.

Die Steifigkeit des Körpers und damit seine Verarbeitbarkeit und Formstabilität im eingebauten Zustand sind verbessert, indem zusätzlich zu der Folie auf wenigstens einer Seite des Körpers eine Wand aus einem gegenüber der Folie steiferen Material vorgesehen ist. Die Wand befindet sich zwischen der außenliegenden Folie und dem innenliegenden Körper. So können auch mehrere Seiten, insbesondere Längsseitenwände, aus einem gegenüber der Folie steiferen Material aufweisen. Die wenigstens eine Wand kann selbst aus einem nicht metallischen schallabsorbierenden Material wie Pappe oder Kunststoff, insbesondere aus Wellpappe, oder aus einem metallischen schallabsorbierenden Material wie Aluminium bestehen.

In einer besonders stabilen Ausführungsform, weist der Körper die Wand auf mindestens zwei Längsseiten auf entlang einer Haupterstreckungsrichtung auf. Überaus bevorzugt liegen die beiden Längsseiten einander gegenüber.

In einer besonders kompakten und einfach herzustellenden Ausführungsform, weist der Körper lediglich auf der zum Strahlflächenaufbau zugewandten Seite eine Wand auf. Um einen besonders großen Schallabsorptionsgrad zu erreichen, ist in dieser Ausführungsform die Wand ein Metallblech, vorzugsweise ein Aluminium-Blech.

Unabhängig von der Lage der Wand/Wände umschließt die Folie den Körper mitsamt der Wand vollständig. Dadurch bilden der Körper, die Wand und die Folie eine gemeinsame, geschlossene Absorptionseinheit. Insbesondere schützt die Folie den Körper und die Wand vor dem Eindringen von Feuchtigkeit, Fremdstoffen und Schädlingen. Dadurch erhöht sich die Haltbarkeit des Strahlflächenaufbaus.

Darüber hinaus verhindert die Folie, dass Bestandteile des schallabsorbierenden Materials des Körpers und/oder der Wand nach außen gelangen können. Sämtliches Material des Körpers und der Wand werden von der Folie im Inneren zurückgehalten.

Zudem werden der Körper und die Wand durch die Folie zusammengehalten. Die Folie verhindert, dass sich die Wand von dem Körper trennt oder dass sich die Wand und der Körper relativ zueinander verschieben. Zusätzlich wird der Körper durch die Wand, mit welchem der Körper durch die Folie gemeinsam eingepackt ist, versteift. Dadurch ist die Absorptionseinheit bestehend aus Körper, Wand und Folie deutlich einfacher handhabbar als der Körper alleine. Auf diese Weise werden der Zusammenbau und der Einbau des Strahlflächenaufbaus erheblich vereinfacht. Aufgrund der Stabilisierung besteht auch weniger Gefahr, dass der Körper selbst oder die Folie beim Einbau beschädigt werden. Insbesondere verhindert die Stabilisierung durch die mit in der Folie umschlossene Wand, dass die Folie durch Biegung des Körpers beim Ein- oder Ausbau beschädigt wird und dass infolge dessen Bestandteile des Körpers aus der Folie heraus nach außen dringen könnten.

Zudem kann die Einheit bestehend aus Körper, Wand und Folie eigenständig hergestellt und transportiert werden. Das vereinfacht die Produktion des Strahlflächenaufbaus.

Die schallabsorbierende Wirkung lässt sich noch weiter verbessern, wenn die wenigstens eine Wand bereichsweise mit Durchgangsöffnungen versehen ist. Eine besonders gute Schallabsorption kann erreicht werden, wenn die Durchgangsöffnungen mit einem Durchmesser von etwa 2 mm bis etwa 20 mm, bevorzugt von 8 mm bis 12 mm, insbesondere etwa 10 mm, versehen sind und in einem Raster mit einem Abstand von etwa 5 mm bis etwa 50 mm, bevorzugt von 20 mm bis 30 mm, insbesondere etwa 25 mm, angeordnet sind.

Alternativ hierzu kann die wenigstens eine Wand geschlossen sein. Dies wird insbesondere dann bevorzugt, wenn es sich bei der Wand um eine an einer Stirnseite des Körpers oder die dem zu temperierenden Raum abgewandte, im eingebauten Zustand obere Wand handelt. Dadurch können Schallwellen in dem Körper mehrfach an den Stirnwänden und der Deckenwand reflektiert werden, wodurch eine gute Dämpfung der Schallwellen erreicht wird.

Wenn der Körper quaderförmig ausgebildet ist, weist dieser vorzugsweise wenigstens eine vollständig offene Seite auf. Insbesondere kann die Unterseite vollständig offen sein. "Offen" in diesem Sinne offen bedeutet, dass auf dieser Stelle keine Wand ausgebildet ist. So wird erreicht, dass Schallemissionen, die von sich im Raum befindlichen Personen oder Geräten ausgehen, durch Öffnungen, die in der Deckenstrahlplatte vorgesehen sein können, in den Körper eintreten und dort absorbiert werden. Statt einer vollständig offenen Unterseite kann diese auch nur einen äußeren Rahmen, bspw. aus einem gegenüber der Folie steiferen Material aufweisen, so dass eine zentrale freie Öffnung entsteht. In jedem Fall sind ist der Körper aber auch an den offenen Seiten und/oder freien Öffnungen durch die umgebende Folie nach außen verschlossen.

Da der Körper und die Wand vollständig von der Folie umschlossen sind, sind eine oder mehrere Außenflächen der Absorptionseinheit erfindungsgemäß nicht regelmäßig und nicht vollständig eben. Die Folie kann beispielsweise Falten schlagen. Dadurch ist die Schalldämpfung verbessert.

In einer besonders bevorzugten Ausführungsform ist die Absorptionsschicht des Strahlflächenaufbaus als ein Akustikvlies ausgebildet. Ein Akustikvlies zeichnet sich dadurch aus, dass bereits eine dünne Lage eine merkliche Absorptionswirkung erzielt. Zusätzlich zu der Absorptionsschicht kann auf der dem zu temperierenden Raum abgewandten Seite des Rohrregisters eine thermische Dämmschicht vorgesehen werden, um den Wärmetransport in die dem Raum abgewandte Richtung zu minimieren.

Die schallabsorbierenden Eigenschaften des Strahlflächenaufbaus können deutlich verbessert werden, wenn der Körper aus Dämmwolle, insbesondere aus Mineralwolle, besteht bzw. die Folie damit gefüllt ist. Erfindungsgemäß kann es auch vorgesehen sein, dass der Körper mit anderen Akustikdämmmaterialen und/oder mit schallschluckenden Bauteilen ausgekleidet bzw. gefüllt ist.

Ein besonders hoher Schallabsorptionsgrad (αₛ) kann dadurch erreicht werden, dass das Verhältnis der Fläche der Öffnungen der Deckenstrahlplatte zu der Grundfläche der Deckenstrahlplatte größer als 0,05, vorzugsweise größer als 0,1 ist. Eine besonders gute Schallabsorptionsfähigkeit ergibt sich bei einem Verhältnis größer als 0,2.

Überraschend kann bereits ein verhältnismäßig kleiner Körper einen hohen Schallabsorptionsgrad (αₛ) erzielen. So liegt das Verhältnis der Grundfläche des Körpers zu der Grundfläche der Deckenstrahlplatte vorzugsweise in einem Bereich von größer als 0,05 und kleiner als 0,5. Bereits in einem Bereich zwischen etwa 0,1 bis 0,2 kann eine für Sporthallen ausreichend gute Schallabsorption erreicht werden.

In einer bevorzugten Ausführungsform ist der Körper zu den freien Rändern der Deckstrahlplatte so beabstandet angeordnet, dass diese von dem zu temperierenden Raum aus nicht als störend wahrgenommen wird und zudem vor Beschädigungen geschützt ist. Besonders bevorzugt wird eine Anordnung, bei der der Abstand dem Körper zu den freien Rändern wenigstens der Höhe des Körpers entspricht.

Es wird besonders bevorzugt, wenn der Schallabsorptionsgrad (αₛ) gemessen nach ISO 354:2003 in einem Frequenzbereich zwischen 200 Hz und 5000 Hz größer als 0,5 ist, überaus bevorzugt größer als 0,7. Insbesondere liegt der Schallabsorptionsgrad (αₛ) in einem Frequenzbereich zwischen 300 Hz und 2500 Hz über 0,8. Gemessen nach ISO 11654 liegt der Schallabsorptionsgrad (αₛ) in einem Frequenzbereich zwischen 1000 Hz und 2000 Hz bei wenigstens 0,85.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich oder in beliebiger Kombination den Gegenstand der Erfindung unabhängig von ihrer Zusammenfassung in den Ansprüchen oder deren Rückbezügen.

Es zeigen schematisch:
- Fig. 1: eine Ansicht eines Strahlflächenaufbaus nach einer ersten Ausführungsform der Erfindung von unten;
- Fig. 2: eine Schnittansicht eines Strahlflächenaufbaus entlang Schnittachse II aus Fig.1;
- Fig. 3: eine Seitenansicht einer Absorptionseinheit des Strahlflächenaufbaus aus Fig. 1 ohne Deckenstrahlplatte und Rohrregister;
- Fig. 4: eine Schnittansicht entlang der Schnittachse IV aus Fig. 3;
- Fig. 5: ein Diagramm des Schallabsorptionsgrads (αₛ) des erfindungsgemäßen Strahlflächenaufbaus aus Fig. 1 abhängig von der Frequenz;
- Fig. 6: eine seitliche Schnittansicht eines Strahlflächenaufbaus nach einer zweiten Ausführungsform der Erfindung;
- Fig. 7: eine seitliche Schnittansicht eines Strahlflächenaufbaus nach einer dritten Ausführungsform der Erfindung;
- Fig. 8: eine seitliche Schnittansicht eines Strahlflächenaufbaus nach einer vierten Ausführungsform der Erfindung;
- Fig. 9: eine seitliche Schnittansicht eines Strahlflächenaufbaus nach einer fünften Ausführungsform der Erfindung; und
- Fig. 10: ein Diagramm des Schallabsorptionsgrads (αₛ) des Strahlflächenaufbaus gemäß Fig. 6 im Vergleich zu einem herkömmlichen Strahlflächenaufbau abhängig von der Frequenz.

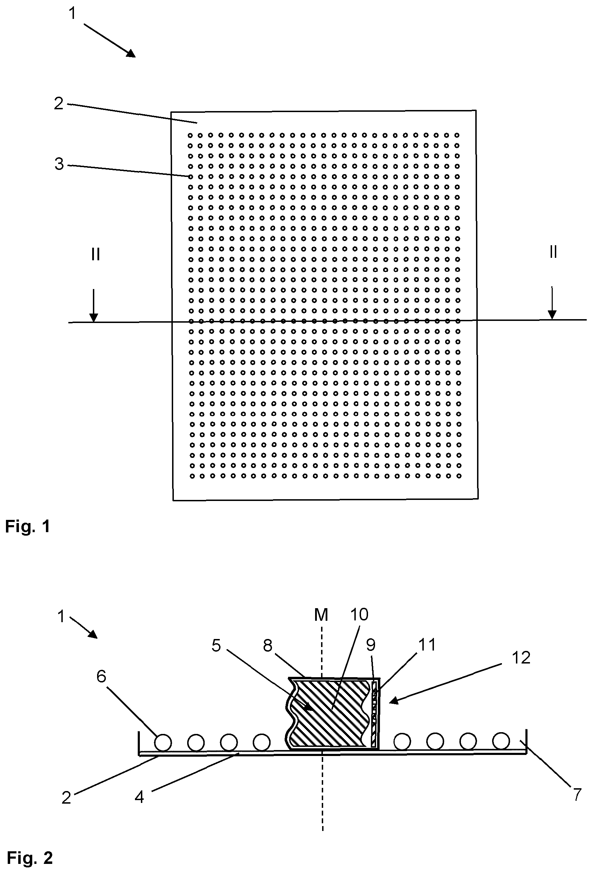

Fig. 1 zeigt einen Strahlflächenaufbau 1 von der Seite des zu temperierenden Raumes her. Zu sehen ist die Abstrahlfläche einer Deckenstrahlplatte 2 mit Öffnungen 3, die in einem regelmäßigen Raster über die gesamte Fläche der Deckenstrahlplatte 2 verteilt sind. Durch die Öffnungen 3 können Schallwellen vom Raum her durch die Deckenstrahlplatte 2 hindurchtreten.

Wie die Schnittansicht der Fig. 2 zeigt, ist auf der dem zu temperierenden Raum abgewandten Seite der Deckenstrahlplatte 2 ist eine Absorptionsschicht 4 aufgebracht, bspw. aufgeklebt. Ein Absorptionskörper 5 aus schallabsorbierendem Material 10 ist zentral auf der Längsachse des Strahlflächenaufbaus angeordnet und seitlich von einem Rohrregister 6 umgeben. Das Rohrregister 6 wird in an sich bekannter Weise von einem Wärmeübertragungsmedium durchströmt und steht zur Wärmeübertragung in Kontakt mit der Deckenstrahlplatte 2. In dem dargestellten Ausführungsbeispiel ist das Rohrregister 6 symmetrisch um den Mittelpunkt M des Strahlflächenaufbaus angeordnet.

An den freien Rändern der Deckenstrahlplatte 2 befinden sich Seitenbleche 7, die senkrecht zu der zum temperierenden Raum weisenden Abstrahlfläche der Deckenstrahlplatte 2 verlaufen.

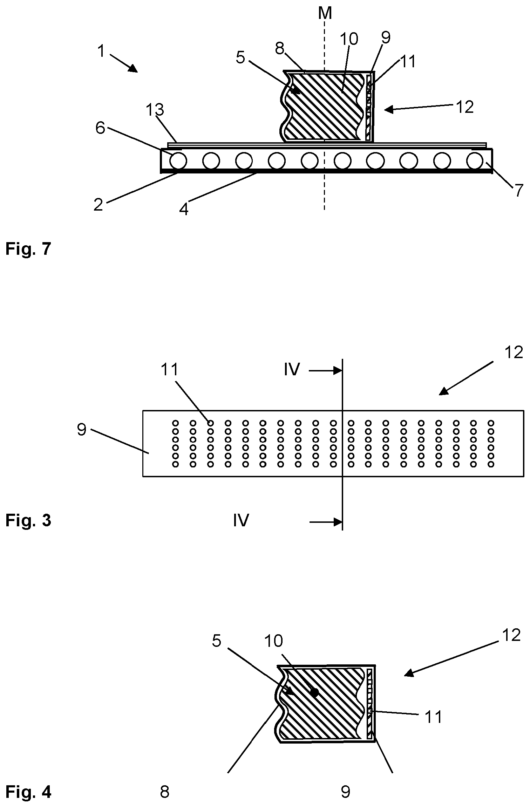

In Fig. 3 ist eine Seitenansicht einer Absorptionseinheit 12 gezeigt. Den Fig. 2 und 4 ist zu entnehmen, dass der Absorptionskörper 5 in dem dargestellten Beispiel seitlich mit einer außenliegenden Wand 9 versehen ist. Zusätzlich sind der Absorptionskörper 5 und die Wand 9 gemeinsam mit einer Folie 8 aus Polyethylen geringer Dichte (LDPE) ummantelt. Auf diese Weise ist die Absorptionseinheit 12 (bestehend aus Absorptionskörper 5, Wand 9 und Folie 8) gebildet. Dabei umfasst die Folie 8 den Absorptionskörper 5 und die Wand 9 im vorliegenden Ausführungsbeispiel ausreichend fest, so dass sich die Wand 9 und der Absorptionskörper 5 zumindest nicht wesentlich relativ zueinander verschieben können. Die offene seitliche Kontur des Absorptionskörpers 5 auf der Seite, die der Wand 9 gegenüberliegt, ist aufgrund der Verkleidung mit der Folie 8 nicht eben und unregelmäßig. Die in den Fig. 2 und 4 gezeigte Kontur ist dabei zu Illustrationszwecken übertrieben stark profiliert gezeigt. In dem dargestellten Beispiel ist nur eine Wand 9 gezeigt. Abweichend hiervon kann die Wand 9 an anderer Stelle vorgesehen sein oder es können mehrere Wände 9 vorgesehen sein.

Ein Großteil der Wand 9 ist mit Durchgangsöffnungen 11 versehen. Durch diese Öffnungen können Schallwellen, die seitlich auf die Absorptionseinheit 12 auftreffen, durch die Folie 8 und die Öffnungen der Wand 9 hindurchgehen und in den Absorptionskörper 5 eindringen. Auch aus der Schnittansicht der Absorptionseinheit 12 nach Fig. 4 ist ersichtlich, dass die Absorptionseinheit 12 durch die Folie 8 teilweise eine unregelmäßige Kontur aufweist, mit der das schallabsorbierende Material 10, wie Dämmwolle, umgeben ist.

Die Oberseite des Absorptionskörpers 5, also die Seite, die von dem zu tempierenden Raum weg weist, sowie die Stirnseiten sind vollständig durch die Folie 8 geschlossen. Zudem können diese Seiten durch Wände 9 geschlossen sein. Auf der Unterseite des Absorptionskörpers 5 ist dagegen vorzugsweise zumindest weitgehend keine Wand 9 ausgebildet, sodass die Unterseite - abgesehen von der Folie 8 - weitgehend offen ist und sodass der Absorptionskörper 5 an der Unterseite über die Folie 8 und die Absorptionsschicht 4 mit der Deckenstrahlplatte 2 in Kontrakt steht.

Zusätzlich zu der Absorptionsschicht 4 kann optional auf der dem zu temperierenden Raum abgewandten Seite des Rohrregisters eine thermische Dämmschicht vorgesehen werden, um den Wärmetransport in die dem Raum abgewandte Richtung zu minimieren. Die Absorptionseinheit kann auf der thermischen Dämmschicht angeordnet sein. Auch die thermische Dämmschicht kann mit zur Schallabsorption beitragen, wesentlicher Zweck ist jedoch die Wärmedämmung.

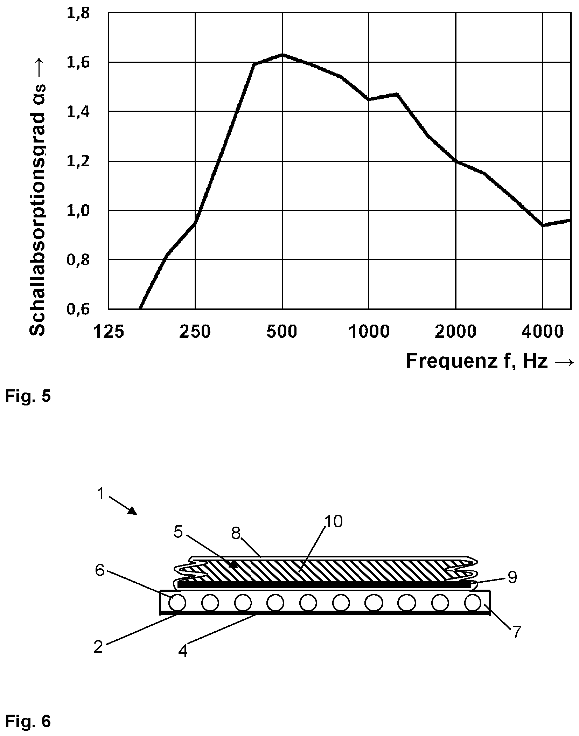

Fig. 5 zeigt den Schallabsorptionsgrad (αₛ) eines erfindungsgemäßen Strahlflächenaufbaus abhängig von der Frequenz (f) gemessen nach ISO 354:2003. Hierzu wurde ein Strahlflächenaufbau mit vier Deckenstrahlplatten in einer Höhe von 160 mm über dem Boden einer Halle angeordnet. Auf der Rückseite der Deckenstrahlplatten war ein Vlies befestigt. Zudem war jeweils eine Absorptionseinheit auf den Deckenstrahlplatten angeordnet. Die Absorptionseinheit bestand jeweils aus einer mit Mineralwolle gefüllten Box aus perforiertem Karton (Lochdurchmesser 10 mm, Raster 25 mm), die von einer LDPE-Folie komplett umschlossen war. Die Deckenstrahlplatten bestanden Stahlblech mit einem Lochanteil von 21 %.

Wie aus dem Diagramm der Fig. 5 hervorgeht, konnte eine signifikante Schallreduzierung insbesondere in dem für Menschen besonders gut hörbaren Bereich von etwa 2000 Hz bis etwa 4500 Hz erreicht werden.

In Fig. 6 ist eine alternative zweite Ausführungsform des erfindungsgemäßen Strahlflächenaufbaus 1 gezeigt. Dabei ist, wie auch in Fig. 2, auf der dem zu temperierenden Raum abgewandten Seite der Deckenstrahlplatte 2 eine Absorptionsschicht 4 aufgebracht, bspw. aufgeklebt. Das Rohrregister 6 ist in dem dargestellten Beispiel gleichmäßig über die Deckenstrahlplatte 2 verteilt angeordnet und wird von einem Wärmeübertragungsmedium durchströmt.

An der dem zu temperierenden Raum abgewandten Seite ist ein Absorptionskörper 5 angeordnet. Dieser kann wie gezeigt direktem auf dem Rohrregister 6 aufliegen oder alternativ in anderer Weise oberhalb des Rohrregisters befestigt sein.

Der Absorptionskörper 5 weist im Inneren ein schallabsorbierendes Material 10, vorzugsweise eine Dämmwolle, beispielsweise eine Mineralwolle, auf. Das schallabsorbierende Material 10 liegt auf einer Wand 9 auf. Bevorzugt ist in dieser Ausführungsform die Wand ein Metallblech, vorzugsweise ein Aluminium-Blech. Die Wand 9 trägt somit das schallabsorbierende Material 10 und stützt dieses auf dem Rohrregister 6 ab. Das auf der Wand 9 aufliegende schallabsorbierende Material 10 ist von einer Folie 8 umschlossen, sodass die Kombination aus Folie 8, Wand 9 und schallabsorbierendem Material 10 einen kompakten Absorptionskörper 5 bilden.

Die in Fig. 6 dargestellten geometrischen Verhältnisse zwischen der Breite der Wand 9, der Breite des schallabsorbierenden Materials 10 und der Breite der Deckenstrahlplatte 2 sowie die Anordnung des Rohrregisters 6 dienen lediglich als Beispiel und müssen mit Bezug auf den konkreten Anwendungsfall dimensioniert werden. Die Höhe des Absorptionskörpers 5 kann dabei verglichen mit der Ausführungsform der Fig. 1 bis 4 gering gehalten werden und beträgt beispielsweise unter 100 mm, z.B. etwa 80 mm.

Eine dritte erfindungsgemäße Ausführungsform ist in Fig. 7 dargestellt. Diese entspricht vom Aufbau des Absorptionskörpers 5 der ersten Ausführungsform nach den Fig. 1 bis 4. Allerdings ist der Absorptionskörper 5 auf einer Dämmschicht 13 angeordnet, die oberhalb des Rohrregisters 6 die Wärmestrahlung nach oben minimiert.

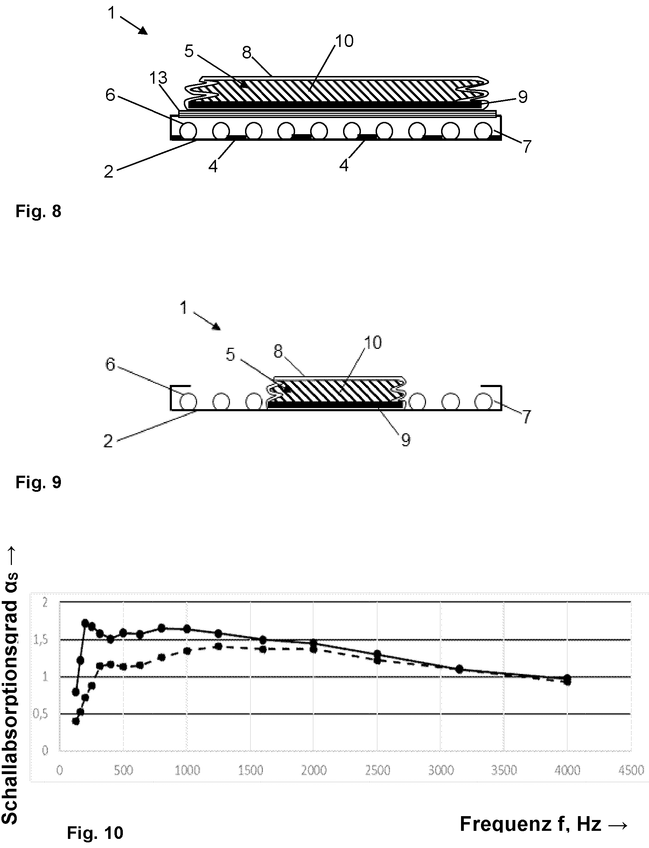

Ein ähnlicher Aufbau ist als vierte erfindungsgemäße Ausführungsform in Fig. 8 dargestellt. Diese entspricht vom Aufbau des Absorptionskörpers 5 der zweiten Ausführungsform nach Fig. 6. Allerdings ist der Absorptionskörper 5 auf einer Dämmschicht 13 angeordnet, die oberhalb des Rohrregisters 6 die Wärmestrahlung nach oben minimiert. Die Absorptionsschicht 4 ist in diesem Beispiel nur durch einzelne Streifen gebildet, die zwischen einzelnen Rohren des Rohrregisters 6 auf den Deckenstrahlplatten 2 aufgebracht sind.

Fig. 9 zeigt eine fünfte erfindungsgemäße Ausführungsform, bei der der Aufbau des Absorptionskörpers 5 der zweiten Ausführungsform nach Fig. 6 entspricht. Ähnlich wie in der ersten Ausführungsform der Fig. 1 bis 4 ist der Absorptionskörper 5 zwischen den Rohren des Rohrregisters 6 auf der Rückseite der Deckenstrahlplatten 2 angeordnet.

Fig. 10 zeigt ein Diagramm des Schallabsorptionsgrads (αₛ) eines Strahlflächenaufbaus gemäß Fig. 6 in durchgezogenen Linien im Vergleich zu einem herkömmlichen Strahlflächenaufbau ohne einen Absorptionskörper 5 (gestrichelte Linie). Hierbei wurde der Schallabsorptionsgrad jeweils abhängig von der Frequenz (f) nach ISO 354:2003 gemessen.

Im konkreten Anwendungsfall wurden hierfür vier Deckenstrahlplatten in einer Höhe von 160 mm über dem Boden einer Halle angeordnet. Der Aufbau der erfindungsgemäßen Platten entsprach im Wesentlichen dem Aufbau gemäß Fig. 6, wobei der Absorptionskörper durch eine auf einem Aluminium-Blech aufliegende Mineralwolle, die von einer LDPE-Folie komplett umschlossen war, gebildet wurde. Die Deckenstrahlplatten bestanden aus einem Stahlblech mit einem Lochanteil von 21 %.

Wie aus Fig. 10 zu entnehmen, konnte durch den zuvor beschriebenen Aufbau insbesondere in den Frequenzbereichen bis 2500 Hz eine beachtliche Schallreduzierung gegenüber Deckenstrahlplatten ohne Absorptionskörper erzielt werden.

In den Frequenzbereichen von 125 bis 1600 Hz ist auch gegenüber der ersten Ausführungsform nach den Fig. 1 bis 4 noch eine signifikante Verbesserung der Schallreduzierung festzustellen, während in den Frequenzbereichen von 2000 bis 4000 Hz gegenüber der ersten Ausführungsform nach den Fig. 1 bis 4 jedenfalls eine leichte Verbesserung der Schallreduzierung festzustellen ist.

In den Figuren 5 und 10 ist der Schallabsorptionsgrad bezogen auf die (in Einbaulage von unten) sichtbare Fläche des Strahlflächenaufbaus dargestellt. Die Werte über 1 ergeben sich daraus, dass u.a. auch die Rückseite des Strahlflächenaufbaus zur Schallreduzierung beiträgt.

### Bezugszeichenliste:

- 1: Strahlflächenaufbau
- 2: Deckenstrahlplatte
- 3: Öffnungen
- 4: Absorptionsschicht
- 5: Absorptionskörper
- 6: Rohrregister
- 7: Seitenbleche
- 8: Folie
- 9: Wand
- 10: schallabsorbierendes Material
- 11: Durchgangsöffnung
- 12: Absorptionseinheit
- 13: Dämmschicht

- M: Mittelpunkt des Strahlflächenaufbaus

## Patentansprüche

1. Strahlflächenaufbau zum Temperieren eines Raumes mit einer Deckenstrahlplatte (2), die dem zu temperierenden Raum zugewandt ist, und mit einem von einem Wärmeübertragungsmedium durchströmten Rohrregister (6), wobei auf der dem zu temperierenden Raum abgewandten Seite der Deckenstrahlplatte (2) eine Absorptionsschicht (4) vorgesehen ist,
wobei auf der dem zu temperierenden Raum abgewandten Seite zusätzlich ein Körper (5) aus einem schallabsorbierenden Material (10) zur Schallabsorption angeordnet ist,
wobei der Körper (5) aus dem schallabsorbierenden Material (10) auf wenigstens einer Seite eine Wand (9) aufweist,
**dadurch gekennzeichnet, dass** der Körper (5) und die Wand (9) gemeinsam von einer Folie (8) umschlossen sind, wobei die Wand (9) aus einem gegenüber der Folie (8) steiferen Material besteht und die Folie (8) eine zumindest teilweise unebene und/oder nicht regelmäßige Oberfläche aufweist.

2. Strahlflächenaufbau nach Anspruch 1, **dadurch gekennzeichnet, dass** die Wand (9) ein Metallblech, vorzugsweise ein Aluminium-Blech, ist, und dass die Wand (9) auf der zum Strahlflächenaufbau (1) zugewandten Seite angeordnet ist.

3. Strahlflächenaufbau nach Anspruch 1, **dadurch gekennzeichnet, dass** die wenigstens eine Wand (9) aus Pappe oder Kunststoff besteht, insbesondere aus Wellpappe.

4. Strahlflächenaufbau nach einem der vorhergehenden Ansprüche, **dadurch gekennzeichnet, dass** die Folie (8) aus einem Kunststoff besteht, insbesondere aus Polyethylen geringer Dichte (LDPE).

5. Strahlflächenaufbau nach einem der vorhergehenden Ansprüche, **dadurch gekennzeichnet, dass** die wenigstens eine Wand (9) bereichsweise mit Durchgangsöffnungen (11) versehen ist, insbesondere mit Durchgangsöffnungen (11) mit einem Durchmesser von etwa 2 mm bis etwa 20 mm, insbesondere etwa 10 mm, die in einem Raster mit einem Abstand von etwa 5 mm bis etwa 50 mm, insbesondere etwa 25 mm, angeordnet sind.

6. Strahlflächenaufbau nach einem der Ansprüche 1 bis 4, **dadurch gekennzeichnet, dass** die wenigstens eine Wand (9) geschlossen ist.

7. Strahlflächenaufbau nach einem der vorhergehenden Ansprüche, **dadurch gekennzeichnet, dass** die Absorptionsschicht (4) ein Dämm- und/oder Akustikvlies ist.

8. Strahlflächenaufbau nach einem der vorhergehenden Ansprüche, **dadurch gekennzeichnet, dass** der Körper (5) aus Dämmwolle, insbesondere Mineralwolle, besteht.

9. Strahlflächenaufbau nach einem der vorhergehenden Ansprüche, **dadurch gekennzeichnet, dass** die Deckenstrahlplatte (2) Öffnungen (3) aufweist, wobei das Verhältnis der Fläche der Öffnungen (3) der Deckenstrahlplatte (2) zu der Grundfläche der Deckenstrahlplatte (2) größer als etwa 0,05, insbesondere größer als 0,1 ist.

10. Strahlflächenaufbau nach einem der vorhergehenden Ansprüche, **dadurch gekennzeichnet, dass** das Verhältnis der Grundfläche des Körpers (5) zu der Grundfläche der Deckenstrahlplatte (2) größer als 0,05 und kleiner als 0,5 ist, insbesondere etwa 0,1 bis 0,2.

11. Strahlflächenaufbau nach einem der vorhergehenden Ansprüche, **dadurch gekennzeichnet, dass** der Körper (5) zu den freien Rändern der Deckenstrahlplatte (2) beabstandet angeordnet ist, insbesondere um eine Strecke, die wenigstens der Höhe des Körpers (5) entspricht.

## Claims

1. Radiating surface structure for tempering a room with a ceiling radiating panel (2) facing the room to be tempered and with a pipe register (6) through which a heat transfer medium flows, wherein on the side of the ceiling radiating panel (2) facing away from the room to be tempered an absorption layer (4) is provided,
wherein on the side facing away from the room to be tempered, additionally a body (5) made of a sound-absorbing material (10) is arranged for sound absorption,
wherein the body (5) made of the sound-absorbing material (10) has a wall (9) on at least one side,
**characterized in that** the body (5) and the wall (9) are jointly enclosed by a foil (8), wherein the wall (9) consists of a material which is stiffer than the foil (8) and the foil (8) has an at least partially uneven and/or irregular surface.

2. Radiating surface structure according to claim 1, **characterized in that** the wall (9) is a metal sheet, preferably an aluminum sheet, and that the wall (9) is arranged on the side facing the radiating surface structure (1).

3. Radiating surface structure according to claim 1, **characterized in that** the at least one wall (9) is made of cardboard or plastic, in particular corrugated cardboard.

4. Radiating surface structure according to any one of the preceding claims, **characterized in that** the foil (8) is made of a plastic, in particular low-density polyethylene (LDPE).

5. Radiating surface structure according to any one of the preceding claims, **characterized in that** the at least one wall (9) is partially provided with through openings (11), in particular with through openings (11) having a diameter of approximately 2 mm to approximately 20 mm, in particular approximately 10 mm, which are arranged in a grid with a spacing of approximately 5 mm to approximately 50 mm, in particular approximately 25 mm.

6. Radiating surface structure according to any one of the claims 1 to 4, **characterized in that** the at least one wall (9) is closed.

7. Radiating surface structure according to any one of the preceding claims, **characterized in that** the absorption layer (4) is an insulating- and/or acoustic fleece.

8. Radiating surface structure according to any one of the preceding claims, **characterized in that** the body (5) consists of insulating wool, in particular mineral wool.

9. Radiating surface structure according to any one of the preceding claims, **characterized in that** the ceiling radiating panel (2) has openings (3), wherein the ratio of the area of the openings (3) of the ceiling radiating panel (2) to the area of the ceiling radiating panel (2) is greater than approximately 0.05, in particular greater than 0.1.

10. Radiating surface structure according to any one of the preceding claims, **characterized in that** the ratio of the area of the body (5) to the area of the ceiling radiating panel (2) is greater than 0.05 and less than 0.5, in particular approximately 0.1 to 0.2.

11. Radiating surface structure according to any one of the preceding claims, **characterized in that** the body (5) is separated from the free edges of the ceiling radiating panel (2), in particular by a distance which corresponds at least to the height of the body (5).

## Revendications

1. Structure de surface rayonnante destinée à réguler la température d'une pièce avec un panneau rayonnant de plafond (2), lequel est tourné vers la pièce dont la température doit être régulée, et avec un registre de tubes (6) traversé par un fluide caloporteur, dans laquelle une couche d'absorption (4) est prévue sur le côté du panneau rayonnant de plafond (2) opposé à la pièce dont la température doit être régulée,
dans laquelle un corps (5) constitué d'un matériau insonorisant (10) est également disposé sur le côté opposé à la pièce dont la température doit être régulée pour l'absorption acoustique,
dans laquelle le corps (5) constitué du matériau insonorisant (10) présente une paroi (9) sur au moins un côté,
**caractérisée en ce que** le corps (5) et la paroi (9) sont entourés conjointement par un film (8), dans laquelle la paroi (9) est constituée d'un matériau plus rigide par rapport au film (8) et le film (8) présente une surface au moins partiellement inégale et/ou irrégulière.

2. Structure de surface rayonnante selon la revendication 1, **caractérisée en ce que** la paroi (9) est une tôle métallique, de préférence une tôle d'aluminium, et **en ce que** la paroi (9) est disposée sur un côté tourné vers la structure de surface rayonnante (1).

3. Structure de surface rayonnante selon la revendication 1, **caractérisée en ce que** l'au moins une paroi (9) est constituée de carton ou de plastique, en particulier de carton ondulé.

4. Structure de surface rayonnante selon l'une des revendications précédentes, **caractérisée en ce que** le film (8) est constitué d'un plastique, en particulier de polyéthylène à faible densité (LDPE).

5. Structure de surface rayonnante selon l'une des revendications précédentes, **caractérisée en ce que** l'au moins une paroi (9) est pourvue par endroits d'ouvertures de passage (11), en particulier d'ouvertures de passage (11) présentant un diamètre d'environ 2 mm à environ 20 mm, en particulier d'environ 10 mm, lesquelles sont disposées en un réseau avec un espacement d'environ 5 mm à environ 50 mm, en particulier d'environ 25 mm.

6. Structure de surface rayonnante selon l'une des revendications 1 à 4, **caractérisée en ce que** l'au moins une paroi (9) est fermée.

7. Structure de surface rayonnante selon l'une des revendications précédentes, **caractérisée en ce que** la couche d'absorption (4) est un voile isolant et/ou acoustique.

8. Structure de surface rayonnante selon l'une des revendications précédentes, **caractérisée en ce que** le corps (5) est constitué de laine isolante, en particulier de laine minérale.

9. Structure de surface rayonnante selon l'une des revendications précédentes, **caractérisée en ce que** le panneau rayonnant de plafond (2) présente des ouvertures (3), dans laquelle le rapport de la surface des ouvertures (3) du panneau rayonnant de plafond (2) à la surface de base du panneau rayonnant de plafond (2) est supérieur à environ 0,05, en particulier supérieur à 0,1.

10. Structure de surface rayonnante selon l'une des revendications précédentes, **caractérisée en ce que** le rapport de la surface de base du corps (5) à la surface de base du panneau rayonnant de plafond (2) est supérieur à 0,05 et inférieur à 0,5, en particulier d'environ 0,1 à 0,2.

11. Structure de surface rayonnante selon l'une des revendications précédentes, **caractérisée en ce que** le corps (5) est disposé de façon espacée par rapport aux bords libres du panneau rayonnant de plafond (2), en particulier selon une distance correspondant au moins à la hauteur du corps (5).
